# EUROPEAN PATENT APPLICATION

(11) **EP 4 412 271 A1**
(43) Date of publication of application: **07.08.2024**
(21) Application number: 22874787.9
(22) Date of filing: 23.09.2022
(51) Int. Cl.: H04W 12/06

(54) **USER-RELATED DATA SERVICE PROCESSING METHOD AND DEVICE, AND NETWORK ELEMENT**

(30) Priority: 30.09.2021 CN 202111163445
(71) Applicant: Vivo Mobile Communication Co., Ltd., Dongguan, Guangdong 523863 (CN)
(72) Inventor: YUAN, Yannan, Dongguan, Guangdong 523863 (CN); YANG, Xiaodong, Dongguan, Guangdong 523863 (CN)
(74) Representative: Lavoix
(86) International application number: PCT/CN2022/120854
(87) International publication number: WO 2023/051401

(57) **Abstract**

This application discloses a method and an apparatus for processing a user-related data service and a network element, and pertains to the field of communication technologies. The method in embodiments of this application includes: A first data plane function obtains user authorization information of the user-related data service; and the first data plane function performs a first operation according to the user authorization information, where the first operation includes at least one of the following: determining whether to receive a user-related data service request; performing authentication and/or security configuration for a user; and establishing a user-level data service anchor for the user.

## Description

### CROSS-REFERENCE TO RELATED APPLICATIONS

This application claims priority to Chinese Patent Application No. 202111163445.8, filed on September 30, 2021 in China, which is incorporated herein by reference in its entirety.

### TECHNICAL FIELD

This application pertains to the field of communication technologies, and specifically relates to a method and an apparatus for processing a user-related data service and a network element.

### BACKGROUND

A network data analytics function (Network Data Analytics Function, NWDAF) is one of network functions of a core network-control plane of 5th-generation (5th-Generation, 5G) mobile communication, and is limited only to subscription events provided by the network functions of the control plane of the 5G core network, and does not support data collection of a core network-user plane, a radio access network, and user equipment (User Equipment, UE). Moreover, the existing network does not yet support registration of a user-level data service node and authorization of a user-related data service, resulting in a failure of a user to have full control over personal digital assets, as well as monetization according to a personal wish. On the one hand, this is not supported by interface performance and functional design, and on the other hand, the current design is centered on network functions without considering differentiated user-level data service requirements, and a network element device does not consider this part of overheads because a function related to a data service is not standardized, affecting network performance.

### SUMMARY

Embodiments of this application provide a method and an apparatus for processing a user-related data service and a network element, to resolve the problem that an existing network does not support authorization and registration of a user-related data service.

According to a first aspect, a method for processing a user-related data service is provided, including:
obtaining, by a first data plane function, user authorization information of the user-related data service; and
performing, by the first data plane function, a first operation according to the user authorization information, where the first operation includes at least one of the following:
   determining whether to receive a user-related data service request;
   performing authentication and/or security configuration for a user; and
   establishing a user-level data service anchor for the user.

According to a second aspect, an apparatus for processing a user-related data service is provided, where the apparatus is used in a first data plane function, and the apparatus includes:
an obtaining module, configured to obtain user authorization information of the user-related data service; and
an execution module, configured to perform a first operation according to the user authorization information, where the first operation includes at least one of the following:
   determining whether to receive a user-related data service request;
   performing authentication and/or security configuration for a user; and
   establishing a user-level data service anchor for the user.

According to a third aspect, a network element including a first data plane function is provided, where the network element includes a processor, a memory, and a program or an instruction that is stored in the memory and that can be run on the processor, where when the program or the instruction is executed by the processor, the steps of the method according to the first aspect are implemented.

According to a fourth aspect, a network element having a first data plane function is provided, including a processor and a communication interface, where the communication interface is used to obtain user authorization information of a user-related data service; and the processor is configured to perform a first operation according to the user authorization information, where the first operation includes at least one of the following: determining whether to receive a user-related data service request; performing authentication and/or security configuration for a user; and establishing a user-level data service anchor for the user.

According to a fifth aspect, a readable storage medium is provided, where the readable storage medium stores a program or an instruction, and when the program or the instruction is executed by a processor, the steps of the method according to the first aspect are implemented.

According to a sixth aspect, a chip is provided, where the chip includes a processor and a communication interface, where the communication interface is coupled to the processor, and the processor is configured to run a program or an instruction to implement the method according to the first aspect.

According to a seventh aspect, a computer program product is provided. The computer program product is stored in a non-transient storage medium. The computer program product is executed by at least one processor to implement the steps of the method according to the first aspect.

According to an eighth aspect, an embodiment of this application provides a communication device, where the communication device is configured to perform the method according to the first aspect.

In the embodiments of this application, according to the user authorization information of the user-related data service, the first user plane function determines whether to accept the user-related data service request, and/or performs authentication and/or security configuration for the user, and/or establishes the user-level data service anchor for the user, to authorize and register the user-related data service, so that the user has a complete control right over personal data, including data monetization according to a personal wish, data sharing within a set range according to a personal wish, and canceling or modifying an access permission according to changes.

### BRIEF DESCRIPTION OF DRAWINGS

FIG. 1 is a block diagram of a wireless communication system to which embodiments of this application are applicable;
FIG. 2 is a flowchart of steps of a method for processing a user-related data service according to an embodiment of the present application;
FIG. 3 is a schematic interaction diagram of Example 1 according to an embodiment of this application;
FIG. 4 is a schematic interaction diagram of Example 2 according to an embodiment of this application;
FIG. 5 is a schematic interaction diagram of Example 3 according to an embodiment of this application;
FIG. 6 is a schematic structural diagram of an apparatus for processing a user-related data service according to an embodiment of this application;
FIG. 7 is a first schematic structural diagram of a network element having a first data plane function according to an embodiment of this application; and
FIG. 8 is a second schematic structural diagram of a network element having a first data plane function according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that technologies described in the embodiments of this application are not limited to a long time evolution (Long Time Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6th Generation, 6G) communication system.

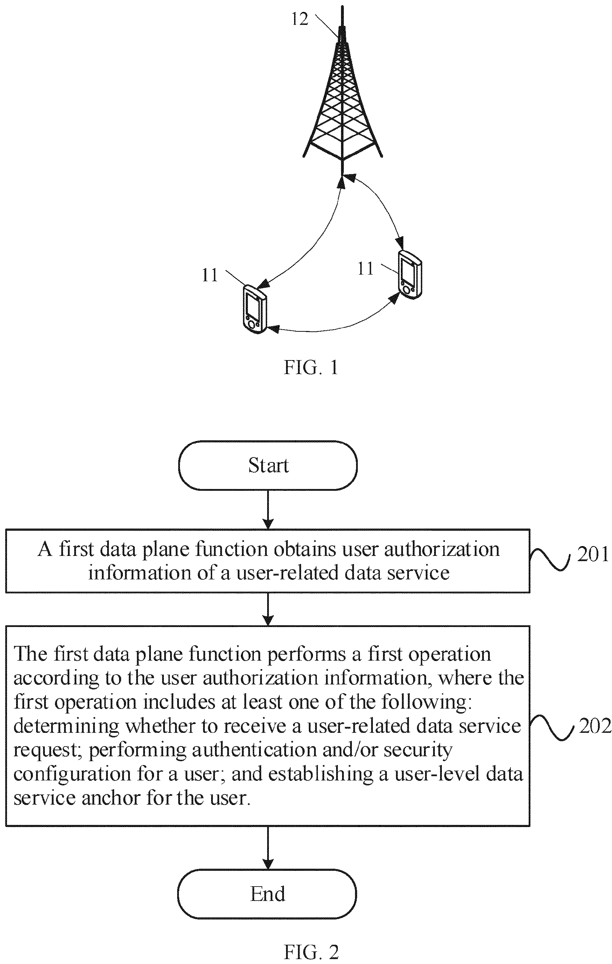

FIG. 1 is a block diagram of a wireless communication system to which embodiments of this application are applicable. The wireless communication system includes a terminal 11 and a network side device 12. The terminal 11 may be a terminal side device such as a mobile phone, a tablet personal computer (Tablet Personal Computer), a laptop computer (Laptop Computer) (or referred to as a notebook computer), a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (Augmented reality, AR)/virtual reality (virtual Reality, VR) device, a robot, a wearable device (Wearable Device), vehicle user equipment (VUE), pedestrian user equipment (PUE), or a smart home (a home device having a wireless communication function, such as a refrigerator, a television, a washing machine, or furniture). The wearable device includes: a smartwatch, a smart bracelet, a smart headphone, smart glasses, smart jewelry (a smart bangle, a smart bracelet, a smart ring, a smart necklace, a smart anklet, a smart ankle chain, and the like), a smart wristband, smart clothing, a game console, and the like. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, Wi-Fi) node, a transmitting receiving point (Transmitting Receiving Point, TRP), or another appropriate term in the art. As long as same technical effect is achieved, the base station is not limited to a specified technical term. It should be noted that, in the embodiments of this application, only a base station in an NR system is used as an example, but a specific type of the base station is not limited.

With reference to the accompanying drawings, a method for processing a user-related data service provided in the embodiments of this application is described below in detail by using some embodiments and application scenarios thereof.

It should be noted that, a network element provided in the embodiments of this application includes but is not limited to at least one of: a first function, a second function, a third function, a core network-control plane function, a core network-user plane function, an application function, a radio access network-user plane function, and a radio access network-control plane function, each with a corresponding network element, node, unit, module, or the like. This is not specifically limited herein.

As shown in FIG. 2, an embodiment of this application further provides a method for processing a user-related data service, including:
Step 201: A first data plane function obtains user authorization information of the user-related data service.
Step 202: The first data plane function performs a first operation according to the user authorization information, where the first operation includes at least one of the following:
   determining whether to receive a user-related data service request;
   performing authentication and/or security configuration for a user; and
   establishing a user-level data service anchor for the user.

In an optional embodiment, the user-level service anchor interacts with the data plane function for extracting and storing data of user authorization, and providing a data service of the user for a user authorization function.

In another optional embodiment, the user-level data service anchor may be established on a side of a core network or on a side of a radio access network. This is not specifically limited herein.

In at least one optional embodiment of this application, the first data plane function includes at least one of the following:
a first function of a core network-data plane, where the first function implements the data service by interacting with at least one of: a core network-control plane function, a core network-user plane function, an application function, a radio access network-user plane function, a radio access network-control plane function, UE, a second function, and a third function; and
a second function of a radio access network-data plane, where the second function implements the data service by interacting with at least one of: the radio access network-control plane function, the radio access network-user plane function, the application function, the UE, the first function, and the third function.

Optionally, the first function is one of core network-network functions, and may also be referred to as a core network-data plane function; and the second function is one of radio access network-network functions, and may also be referred to as a radio access network-data plane function.

In this embodiment of this application, according to the user authorization information of the user-related data service, the core network-data plane function or the radio access network-data plane function determines whether to accept the user-related data service request, and/or performs authentication and/or security configuration for a user, to authorize and register the user-related data service, so that the user has a complete control right over personal data, including data monetization according to a personal wish, data sharing within a set range according to a personal wish, and canceling or modifying an access permission according to changes.

In an optional embodiment, the user-related data service includes at least one of the following:
data collection including a user identifier;
data storage including the user identifier;
data access including the user identifier; and
a data request including the user identifier.

Optionally, the user identifier may be a persistent identifier, such as a subscription permanent identifier (Subscription Permanent Identifier, SUPI), an external IP address, a media access control (Media Access Control, MAC) address, an internal IP address, a subscription concealed identifier (Subscription Concealed Identifier, SUCI), or the like; or may be a temporary identifier, such as a random access-radio network temporary identifier (Random Access-Radio Network Temporary Identifier, RA-RNTI), a temporary cell-radio network temporary identifier (Temporary Cell-RNTI, TC-RNTI), a cell-radio network temporary identifier (Cell-RNTI, C-RNTI), a configured scheduling-radio network temporary identifier (Configured Scheduling-RNTI, CS-RNTI), a modulation and coding scheme-cell-radio network temporary identifier (Modulation and coding scheme-C-RNTI, MCS-C-RNTI), or the like.

In at least one optional embodiment of this application, the user authorization information of the user-related data service includes at least one of the following:
an authorization type of the data service, including allowing or disallowing execution of the user-related data service, and/or, querying the user whether the user-related data service is allowed when the user-related data service arrives;
authorization information of the data service;
effective duration of authorization of the data service;
user data hierarchical information, where the user defines, according to a personal wish, different levels and data included in the different levels; for example, high, medium, and low levels and the data included in the three levels are defined, where the high level includes data identified by a mobile phone number or the SUPI of the user, such as data of instant messaging software such as WeChat; medium level data is positioning data, sensing data, or the like; and low level data is measurement data identified by a radio domain ID (C-RNTI);
a data range in which a network is allowed to perform the data service, where the data range is represented by, for example, one of the high, medium, and low levels of the user data hierarchical information, or any combination of the three levels;
configuration information of data collection;
configuration information of data storage; and
configuration information of data access.

Optionally, the configuration information of data collection includes at least one of the following:
information about a data plane function that is allowed to perform data collection;
data information that can be collected by different data plane functions;
information about a time in which data collection is allowed, for example, a start time and/or an end time; and
information about a frequency at which data collection is allowed, for example, a maximum collection frequency is 1000 times per second.

Optionally, the configuration information of data storage includes at least one of the following:
information about a data plane function that is allowed to perform data storage;
data information that can be stored by different data plane functions, where the data plane function includes at least one of: the first function, the second function, and a data plane function on the UE side;
a time length of storage;
storage space information, for example, a size of storage space; and
security requirement information of data storage, for example, whether distributed storage is required.

Optionally, the configuration information of data access includes at least one of the following:
a configuration of data information allowed to be accessed or obtained by each network function, for example, a configuration about which network functions are allowed to access or obtain which data;
a data access configuration based on authorization and/or authentication;
whether time sequence data is provided;
whether real-time data is provided, where the real-time data includes a sampling rate and/or a delay from data generation to a data requester; if the real-time data is provided, the foregoing time parameters corresponding to the real-time data may be correspondingly configured or preconfigured, for example, service parameters of the real-time data are as follows: the data sampling rate is one sampling point per ms (namely, millisecond), and the delay from data generation to the data requester is in a magnitude of 10 ms;
data security configuration information, for example, a data watermark and/or encryption;
allowed data use, including network optimization, user service optimization, a common service, data monetization, and the like;
information about a time in which data access is allowed, for example, a start time and/or an end time;
information about a frequency at which data collection is allowed, for example, a maximum collection frequency is 1000 times per second; and
a data access or service record configuration, for example, an operator record, multiparty distributed accounting, or the like.

In at least one embodiment of this application, step 201 includes at least one of the following:
The first data plane function obtains user-related data service subscription information, where the data service subscription information includes the user authorization information; and the data service subscription information may be stored in a core network storage function (for example, unified data management (Unified Data Management (UDM))), or may be stored in a data plane function having a subscription information storage function (for example, the core network-data plane function, the radio access network-data plane function, or the data plane function of the UE side);
the first data plane function obtains the user authorization information that is of the user-related data service and that is sent by user equipment UE or an application function; and
the first data plane function obtains the user authorization information that is of the user-related data service and that is stored by a radio access network storage function, where the user authorization information that is of the user-related data service and that is stored by the radio access network storage function is reported by the terminal or the application function.

In at least one optional embodiment of this application, before the first data plane function performs authentication and/or security configuration for the user, the method further includes:
The first data plane function receives a registration request message of the user data service anchor, where the registration request message includes at least one of the following:
user-level anchor establishment request information, where the user requests, according to a personal wish, to establish a data service anchor of the user in the core network or the radio access network, for data collection, storage, the data service, and the like that are required by the user; and
configuration information of the user-level anchor requesting to be registered.

In an optional embodiment, the configuration information of the user-level anchor requesting to be registered includes at least one of the following:
user data hierarchical information, where the user defines, according to a personal wish, different levels and data included in the different levels; for example, high, medium, and low levels and the data included in the three levels are defined, where the high level includes data identified by a mobile phone number or the SUPI of the user, such as data of instant messaging software such as WeChat; medium level data is positioning data, sensing data, or the like; and low level data is measurement data identified by a radio domain ID (C-RNTI);
a data range in which a network is allowed to perform the data service, where the data range is represented by, for example, one of the high, medium, and low levels of the user data hierarchical information, or any combination of the three levels;
configuration information of data collection;
configuration information of data storage; and
configuration information of data access.

Optionally, the configuration information of data collection includes at least one of the following:
information about a data plane function that is allowed to perform data collection; data information that can be collected by different data plane functions;
information about a time in which data collection is allowed, for example, a start time and/or an end time; and
information about a frequency at which data collection is allowed, for example, a maximum collection frequency is 1000 times per second.

Optionally, the configuration information of data storage includes at least one of the following:
information about a data plane function that is allowed to perform data storage;
data information that can be stored by different data plane functions, where the data plane function includes at least one of: the first function, the second function, and a data plane function on the UE side;
a time length of storage;
storage space information, for example, a size of storage space; and
security requirement information of data storage, for example, whether distributed storage is required.

Optionally, the configuration information of data access includes at least one of the following:
a configuration of data information allowed to be accessed or obtained by each network function, for example, a configuration about which network functions are allowed to access or obtain which data;
a data access configuration based on authorization and/or authentication;
whether time sequence data is provided;
whether real-time data is provided, where the real-time data includes a sampling rate and/or a delay from data generation to a data requester; if the real-time data is provided, the foregoing time parameters corresponding to the real-time data may be correspondingly configured or preconfigured, for example, service parameters of the real-time data are as follows: the data sampling rate is one sampling point per ms (namely, millisecond), and the delay from data generation to the data requester is in a magnitude of 10 ms;
data security configuration information, for example, a data watermark and/or encryption;
allowed data use, including network optimization, user service optimization, a common service, data monetization, and the like;
information about a time in which data access is allowed, for example, a start time and/or an end time;
information about a frequency at which data collection is allowed, for example, a maximum collection frequency is 1000 times per second; and
a data access or service record configuration, for example, an operator record, multiparty distributed accounting, or the like.

In at least one optional embodiment of this application, after the first data plane function performs authentication and/or security configuration for the user, the method further includes:
in a case that verification on the authentication and/or the security configuration succeeds, sending a registration acceptance message of the user data service anchor to a terminal, and establishing the user-level data service anchor for the user.

Further, the method further includes:
In a case that the user-related data service request is received, and the data service request requires user data in which the user data service anchor has been established, the first data plane function queries related information of the user data service anchor, to determine whether to receive the user-related data service request.

It should be noted that in this embodiment of this application, regardless of whether a data service consumer sends the data service request to the first data plane function, the first data plane function can collect and store user data according to the configuration of the user data service anchor. When a data service consumer requests the data service, the first data plane function mainly determines whether the data service consumer is allowed to access the user data service requested by the user data consumer.

In at least one embodiment of this application, in a case that the authorization type of the data service is: querying the user whether the user-related data service is allowed when the user-related data service arrives, the method further includes:

The first data plane function sends request information to a terminal, where the request information is used to query the terminal whether the data service is allowed; and
the first data plane function receives request response information sent by the terminal, where the request response information includes: the data service is allowed, or the data service is not allowed.

For example, the first data plane function may directly send the request information to the terminal, or send the request information to the terminal by using an access and mobility management function (Access and Mobility Management Function, AMF), or send the request information by using radio resource control (Radio Resource Control, RRC) signaling, or send the request information by using the application function AF.

Optionally, the request information includes at least one of the following:
description information of the data service;
content including the requested data service;
use of the data service;
a validity period of the data service; and
a service quality requirement for the requested data service.

In conclusion, in this embodiment of this application, according to the user authorization information of the user-related data service, the core network-data plane function or the radio access network-data plane function determines whether to accept the user-related data service request, and/or performs authentication and/or security configuration for a user, to authorize and register the user-related data service, so that the user has a complete control right over personal data, including data monetization according to a personal wish, data sharing within a set range according to a personal wish, and canceling or modifying an access permission according to changes.

To describe the method for processing a user-related data service provided in this embodiment of this application more clearly, the following provides descriptions with reference to three examples.

### Example 1: user service authorization based on subscription information

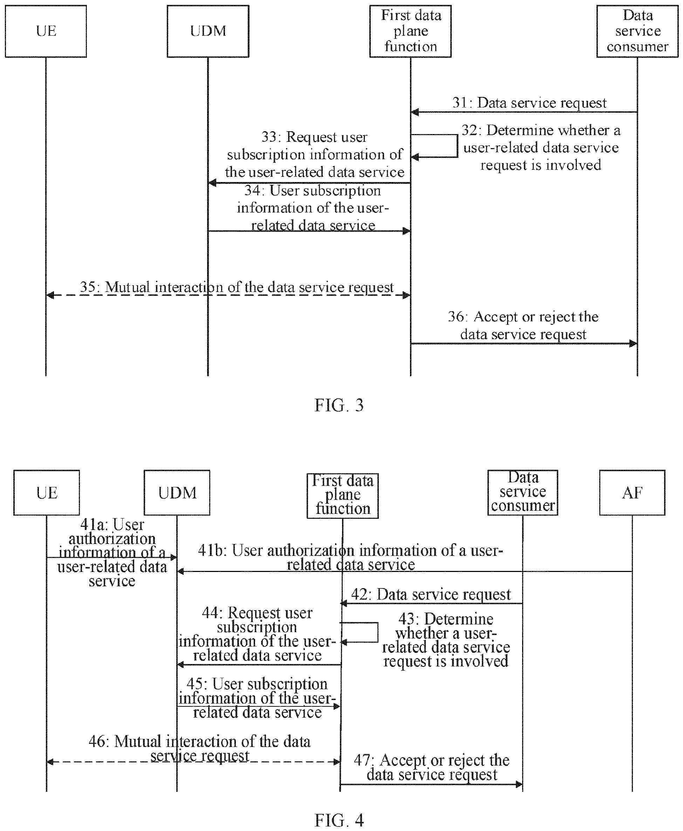

As shown in FIG. 3, the system includes a data service consumer, a first data plane function, UDM, and UE. The first data plane function is a core network data service function or a radio access network data service function, including a control plane function of a data service, and/or a data plane function of the data service, and connected to a control plane function and a user plane function of a core network and/or a radio access network. This may be deployed either centrally or in a distributed manner according to the scenario, and is not specifically limited herein. The data service consumer may be one or more of: an application function (Application Function, AF), a core network-control plane (Core Network-Control Plane, CN-CP) function, a core network-user plane (Core Network-User Plane, CN-CP) function, a radio access network function (for example, a base station (gNB), a centralized unit (Centralized Unit, CU), a centralized unit-control plane (Centralized Unit-Control Plane, CU-CP), a centralized unit-user plane (Centralized Unit-User Plane, CU-UP), a distributed unit (Distributed Unit, DU), or the like), and UE. Related steps are as follows:
Step 31: The first data plane function receives a data service request, where the data service request includes a description of a data service, and includes at least one of the following: content of the requested data service, use of the data service, a validity period of the data service, and service quality requirements for accuracy, a sampling frequency, a delay, and the like of the requested data service. Optionally, the request includes a UE identifier or a UE group identifier (for example, network slice selection assistance information NSSAI).
Step 32: If the request in step 31 includes a UE identifier, or the first data plane function determines, according to the received data service request, whether data collection, storage, or access per UE (per UE) needs to be performed, and if data collection, storage, or access per UE needs to be performed, the first function may determine UEs that need to participate or may request another function for UEs that need to participate.
Step 33: The first data plane function requests the UDM to check data service subscription information of the related UE, to learn consent information of the user. Optionally, for some users, the first data plane function having a user subscription information storage function may have known the subscription information of the user data service (for example, from a previous request, or the first data plane function pre-requests all user subscription information or user subscription information in which the data service is allowed).
Step 34: The UDM feeds back user subscription information of the corresponding user-related data service.
Step 35: If an authorization type that is of the data service and that is in the user subscription information is querying the user whether the user-related data service is allowed when the user-related data service arrives, request a data provider for whether the data service is allowed. The first data plane function may directly send request information to the UE, or send the request information by using an AMF, or send the request information by using radio access network RRC signaling, or send the request information by using the AF. The request information includes at least one of the following: description information of the data service, content including the requested data service, use of the data service, a validity period of the data service, and one or more of service quality requirements for accuracy, a sampling frequency, a delay, and the like of the requested data service. Request response information of the UE includes at least one of the following: the data service is allowed, or the data service is not allowed.
Step 36: Accept or reject the data service request according to mutual information in step 34 and/or step 35.

### Example 2: User service authorization based on UE and/or an application function

AF is shown in FIG. 4, where the system includes the application function AF, a data service consumer, a first data plane function, UDM, and the UE. The first data plane function is a core network data service function or a radio access network data service function, including a control plane function of a data service, and/or a data plane function of the data service, and connected to a control plane function and a user plane function of a core network and/or a radio access network. This may be deployed either centrally or in a distributed manner according to the scenario, and is not specifically limited herein. The data service consumer may be one or more of: an application function AF, a core network-control plane function, a core network-user plane function, a radio access network function (for example, a base station gNB, a centralized unit CU, a centralized unit-control plane CU-CP, a centralized unit-user plane CU-UP, a distribution unit DU, or the like) and UE.

Step 41a and step 41b: The UE and/or the AF send(s) user authorization information of a user-related data service to a network. The network may be UDM or a data plane function that has a user authorization information storage function. The UE may send the user authorization information to the UDM by using an AMF; or directly send the user authorization information to the data plane function, or send the user authorization information to the data plane function by using the AMF, or send the user authorization information to the data plane function by using radio access network RRC signaling. The AF may send the user authorization information to the data plane function or the UDM by using a network exposure function (Network Exposure Function, NEF), or directly send the user authorization information to the data plane function or the UDM.

In an implementation, if the authorization information sent by the UE or the AF is inconsistent with subscription information, the network may overwrite the subscription information of the user data service according to the received authorization information of the user data service.

In another implementation, if the authorization information sent by the UE or the AF is complementary to the subscription information, the network stores both the received authorization information of the user data service and the subscription information of the user data service.

In another implementation, if the subscription information of the user data service does not exist in the network, the network may store the authorization information of the user data service, and store the authorization information of the user data service into the UDM as temporary subscription information of the UE.

Step 42: The first data plane function receives a data service request, where the data service request includes a description of a data service, and includes at least one of the following: content of the requested data service, use of the data service, a validity period of the data service, and service quality requirements for accuracy, a sampling frequency, a delay, and the like of the requested data service. Optionally, the request includes a UE identifier or a UE group identifier (for example, network slice selection assistance information NSSAI).

Step 43: If the request in step 42 includes a UE identifier, or the first data plane function determines, according to the received data service request, whether data collection, storage, or access per UE needs to be performed, and if data collection, storage, or access per UE needs to be performed, the first data plane function may determine UEs that need to participate or may request another function for UEs that need to participate.

Step 44: The first data plane function requests the UDM to check data service subscription information of the related UE, to learn consent information of the user. Optionally, for some users, the first data plane function having a user subscription information storage function may have known the subscription information of the user data service (for example, from a previous request, or the first data plane function pre-requests all user subscription information or user subscription information in which the data service is allowed).

Step 45: The UDM feeds back user subscription information of the corresponding user-related data service.

Step 46: If an authorization type that is of the data service and that is in the user subscription information is querying the user whether the user-related data service is allowed when the user-related data service arrives, request a data provider for whether the data service is allowed. The first data plane function may directly send request information to the UE, or send the request information by using an AMF, or send the request information by using radio access network RRC signaling, or send the request information by using the AF. The request information includes at least one of the following: description information of the data service, content including the requested data service, use of the data service, a validity period of the data service, and one or more of service quality requirements for accuracy, a sampling frequency, a delay, and the like of the requested data service. Request response information of the UE includes at least one of the following: the data service is allowed, or the data service is not allowed.

Step 47: Accept or reject the data service request according to mutual information in step 45 and/or step 46.

### Example 3: registration of a user data service anchor

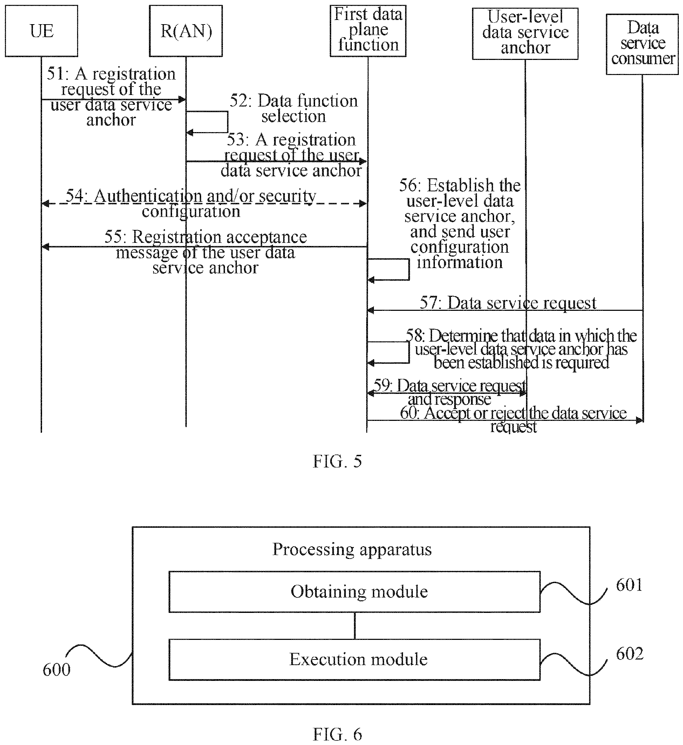

FIG. 5 shows a registration scheme of the user data service anchor, where the user data service anchor is a function that can provide a service of user data collection, storage, or data access/acquisition. The system includes a data service consumer, a first data plane function, a (radio) access network function ((R)AN), the user data service anchor, and UE. Related steps are as follows:
Step 51: The UE sends registration request information of the user data service anchor to a network.
Step 52: The radio access network selects a data service function according to a user identifier and/or registration information (such as real-time quality and security) of the user data service anchor that are/is provided by a user.

In an implementation, the radio access network selects a data service function of a core network.

In another implementation, the radio access network selects a data service function of the radio access network, where the data service function of the radio access network is responsible for data collection, storage, access, and the like of the radio access network.

Step 53: The radio access network sends the registration request to a selected first data service function. If the data service function is one of core network functions, the registration request may be sent to the first data plane function by using an AFM or directly.

Step 54: The first data plane function performs authentication and security configuration according to the user authorization information of the data service. The user authorization information may be based on subscription information and/or the authorization information of the user data service. This has been illustrated in Examples 1 and 2, and details are not described herein again.

Step 55: If verification on the authentication and/or the security configuration succeeds, send a registration acceptance message of the user data service anchor to the UE.

Step 56: If registration of the data service anchor succeeds, the first data plane function establishes the user-level data service anchor for the user according to registration information of the user for the data anchor; and collects data of the user for a related data providing function, and stores the data on the data service anchor of the user according to a configuration.

Step 57: Optionally, if the user data service anchor can provide the user data service, the data consumer sends a data service request.

Step 58: The first data plane function determines that the data service request requires data in which the user-level data service anchor has been established.

Step 59: The first data plane function exchanges the data service request and response with the user-level data service anchor, to determine whether the request is allowed.

Step 60: Accept or reject the data service request according to the information in step 59.

In this example, regardless of whether a data service consumer requests the first data plane function for the data service, the first data plane function collects and stores user data according to the configuration of the user data service anchor. When a data service consumer requests the data, the first data plane function mainly determines whether the data service consumer is allowed to access the user data service requested by the user data consumer.

It should be noted that the method for processing a user-related data service provided in the embodiments of this application may be performed by an apparatus for processing a user-related data service or a control module that is in the apparatus for processing a user-related data service and that is configured to perform the method for processing a user-related data service. In the embodiments of this application, an example in which the apparatus for processing a user-related data service performs the method for processing a user-related data service is used to describe the apparatus for processing a user-related data service provided in the embodiments of this application.

As shown in FIG. 6, an embodiment of this application further provides an apparatus 600 for processing a user-related data service, where the apparatus 600 is used in a first data plane function, and the apparatus includes:
an obtaining module 601, configured to obtain user authorization information of the user-related data service; and
an execution module 602, configured to perform a first operation according to the user authorization information, where the first operation includes at least one of the following:
   determining whether to receive a user-related data service request;
   performing authentication and/or security configuration for a user; and
   establishing a user-level data service anchor for the user.

In an optional embodiment, the first data plane function includes at least one of the following:
a first function of a core network data plane; and
a second function of a radio access network data plane;

In an optional embodiment, the user authorization information of the user-related data service includes at least one of the following:
an authorization type of the data service;
authorization information of the data service;
effective duration of authorization of the data service;
user data hierarchical information;
a data range in which a network is allowed to perform the data service;
configuration information of data collection;
configuration information of data storage; and
configuration information of data access.

In an optional embodiment, the user-related data service includes at least one of the following:
data collection including a user identifier;
data storage including the user identifier;
data access including the user identifier; and
a data request including the user identifier.

In an optional embodiment, the obtaining module includes at least one of the following:
a first obtaining submodule, configured to obtain user-related data service subscription information, where the data service subscription information includes the user authorization information;
a second obtaining submodule, configured to obtain the user authorization information that is of the user-related data service and that is sent by a terminal or an application function; and
a third obtaining submodule, configured to obtain the user authorization information that is of the user-related data service and that is stored by a radio access network storage function, where the user authorization information that is of the user-related data service and that is stored by the radio access network storage function is reported by the terminal or the application function.

In an optional embodiment, the apparatus further includes:
a first receiving module, configured to receive a registration request message of the user data service anchor, where the registration request message includes at least one of the following:
user-level anchor establishment request information; and
configuration information of the user-level anchor requesting to be registered.

In an optional embodiment, the configuration information of the user-level anchor requesting to be registered includes at least one of the following:
user data hierarchical information;
a data range in which a network is allowed to perform the data service;
configuration information of data collection;
configuration information of data storage; and
configuration information of data access.

In an optional embodiment, the configuration information of data collection includes at least one of the following:
information about a data plane function that is allowed to perform data collection;
data information that can be collected by different data plane functions;
information about a time in which data collection is allowed; and
information about a frequency at which data collection is allowed.

In an optional embodiment, the configuration information of data storage includes at least one of the following:
information about a data plane function that is allowed to perform data storage;
data information that can be stored by different data plane functions;
a time length of storage;
storage space information; and
security requirement information of data storage.

In an optional embodiment, the configuration information of data access includes at least one of the following:
a configuration of data information allowed to be accessed or obtained by each network function;
a data access configuration based on authorization and/or authentication;
whether time sequence data is provided;
whether real-time data is provided;
data security configuration information;
allowed data use;
information about a time in which data access is allowed;
information about a frequency at which data collection is allowed; and
a data access or service record configuration.

In an optional embodiment, in a case that the authorization type of the data service is: querying the user whether the user-related data service is allowed when the user-related data service arrives, the apparatus further includes:
a first sending module, configured to send request information to a terminal, where the request information is used to query the terminal whether the data service is allowed; and
a second receiving module, configured to receive request response information sent by the terminal, where the request response information includes: the data service is allowed, or the data service is not allowed.

In an optional embodiment, the request information includes at least one of the following:
description information of the data service;
content including the requested data service;
use of the data service;
a validity period of the data service; and
a service quality requirement for the requested data service;

In an optional embodiment, the apparatus further includes:
a second sending module, configured to: in a case that verification on the authentication and/or the security configuration succeeds, send a registration acceptance message of the user data service anchor to a terminal, and establish the user-level data service anchor for the user.

In an optional embodiment, the apparatus further includes:
a determining module, configured to: in a case that the user-related data service request is received, and the data service request requires user data in which the user data service anchor has been established, query related information of the user data service anchor, to determine whether to receive the user-related data service request.

In this embodiment of this application, according to the user authorization information of the user-related data service, the core network data plane function or the radio access network data plane function determines whether to accept the user-related data service request, and/or performs authentication and/or security configuration for a user, to authorize and register the user-related data service, so that the user has a complete control right over personal data, including data monetization according to a personal wish, data sharing within a set range according to a personal wish, and canceling or modifying an access permission according to changes.

It should be noted that the apparatus for processing a user-related data service provided in the embodiments of this application is an apparatus that can perform the foregoing method for processing a user-related data service. Therefore, all embodiments of the foregoing method for processing a user-related data service are applicable to the apparatus, and same or similar beneficial effect can be achieved.

The apparatus for processing a user-related data service in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The apparatus for processing a user-related data service provided in this embodiment of this application can implement the processes implemented in the method embodiments in FIG. 1 to FIG. 5, with the same technical effect achieved. To avoid repetition, details are not described herein again.

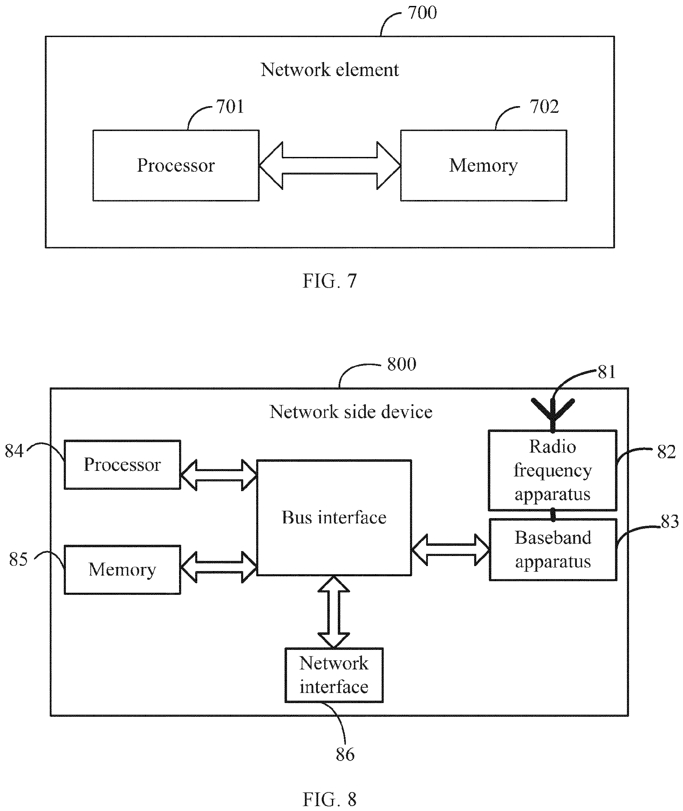

Optionally, as shown in FIG. 7, an embodiment of this application further provides a network element 700 having a first data plane function, including a processor 701, a memory 702, and a program or an instruction that is stored in the memory 702 and that can be run on the processor 701, and when the program or the instruction is executed by the processor 701, the processes of the foregoing embodiment of the method for processing a user-related data service are implemented, and same technical effect can be achieved. To avoid repetition, details are not described herein again.

An embodiment of this application further provides a network element having a first data plane function, including a processor and a communication interface, where the communication interface is used to obtain user authorization information of a user-related data service; and the processor is configured to perform a first operation according to the user authorization information, where the first operation includes at least one of the following: determining whether to receive a user-related data service request; performing authentication and/or security configuration for a user; and establishing a user-level data service anchor for the user. This embodiment of the network element corresponds to the foregoing method embodiment of the network element. Each implementation process and implementation of the foregoing method embodiment may be applicable to this embodiment of the network element, and same technical effect can be achieved.

Specifically, an embodiment of this application further provides a network element. As shown in FIG. 8, the network element 800 includes an antenna 81, a radio frequency apparatus 82, and a baseband apparatus 83. The antenna 81 is connected to the radio frequency apparatus 82. In an uplink direction, the radio frequency apparatus 82 receives information by using the antenna 81, and sends the received information to the baseband apparatus 83 for processing. In a downlink direction, the baseband apparatus 83 processes to-be-sent information, and sends the information to the radio frequency apparatus 82. The radio frequency apparatus 82 processes the received information and then sends the information by using the antenna 81.

The frequency band processing apparatus may be located in the baseband apparatus 83. The method performed by the network element in the foregoing embodiment may be implemented in the baseband apparatus 83. The baseband apparatus 83 includes a processor 84 and a memory 85.

The baseband apparatus 83 may include, for example, at least one baseband board, and a plurality of chips are disposed on the baseband board. As shown in FIG. 8, one of the chips is, for example, the processor 84, which is connected to the memory 85, to invoke a program in the memory 85, so as to perform the operations of the network device shown in the foregoing method embodiments.

The baseband apparatus 83 may further include a network interface 86, configured to exchange information with the radio frequency apparatus 82. For example, the interface is a common public radio interface (Common Public Radio Interface, CPRI).

Specifically, the network element in this embodiment of the present invention further includes an instruction or a program that is stored in the memory 85 and that can be run on the processor 84. The processor 84 invokes the instruction or the program in the memory 85 to perform the method performed by the modules shown in FIG. 6, and same technical effect is achieved. To avoid repetition, details are not described herein again.

An embodiment of this application further provides a readable storage medium, where the readable storage medium stores a program or an instruction, and when the program or the instruction is executed by a processor, the processes of the foregoing embodiments of the method for processing a user-related data service are implemented, with the same technical effect achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or a compact disc.

An embodiment of this application further provides a chip. The chip includes a processor and a communication interface, the communication interface is coupled to the processor, and the processor is configured to run a program or an instruction to implement the processes of the foregoing embodiment of the method for processing a user-related data service, and same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program product. The computer program product is stored in a non-volatile storage medium, and the computer program product is executed by at least one processor to implement the processes of the foregoing method embodiment, and same technical effect can be achieved. To avoid repetition, details are not described herein again.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art can clearly understand that the method in the foregoing embodiments may be implemented by software in addition to a necessary universal hardware platform or by hardware only. In most circumstances, the former is a better implementation. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A method for processing a user-related data service, comprising:
obtaining, by a first data plane function, user authorization information of the user-related data service; and
performing, by the first data plane function, a first operation according to the user authorization information, wherein the first operation comprises at least one of the following:
determining whether to receive a user-related data service request;
performing authentication and/or security configuration for a user; and
establishing a user-level data service anchor for the user.

2. The method according to claim 1, wherein the first data plane function comprises at least one of the following:
a first function of a core network data plane; and
a second function of a radio access network data plane.

3. The method according to claim 1, wherein the user authorization information of the user-related data service comprises at least one of the following:
an authorization type of the data service;
authorization information of the data service;
effective duration of authorization of the data service;
user data hierarchical information;
a data range in which a network is allowed to perform the data service;
configuration information of data collection;
configuration information of data storage; and
configuration information of data access.

4. The method according to claim 1, wherein the user-related data service comprises at least one of the following:
data collection comprising a user identifier;
data storage comprising the user identifier;
data access comprising the user identifier; and
a data request comprising the user identifier.

5. The method according to claim 1, wherein the obtaining, by a first data plane function, user authorization information of the user-related data service comprises at least one of the following:
obtaining, by the first data plane function, user-related data service subscription information, wherein the data service subscription information comprises the user authorization information;
obtaining, by the first data plane function, the user authorization information that is of the user-related data service and that is sent by user equipment UE or an application function; and
obtaining, by the first data plane function, the user authorization information that is of the user-related data service and that is stored by a radio access network storage function, wherein the user authorization information that is of the user-related data service and that is stored by the radio access network storage function is reported by the terminal or the application function.

6. The method according to claim 1, wherein before the performing, by the first data plane function, authentication and/or security configuration for a user; and/or before the establishing, by the first data plane function, a user-level data service anchor for the user, the method further comprises:
receiving, by the first data plane function, a registration request message of the user data service anchor, wherein the registration request message comprises at least one of the following:
user-level anchor establishment request information; and
configuration information of the user-level anchor requesting to be registered.

7. The method according to claim 6, wherein the configuration information of the user-level anchor requesting to be registered comprises at least one of the following:
user data hierarchical information;
a data range in which a network is allowed to perform the data service;
configuration information of data collection;
configuration information of data storage; and
configuration information of data access.

8. The method according to claim 2 or 7, wherein the configuration information of data collection comprises at least one of the following:
information about a data plane function that is allowed to perform data collection;
data information that can be collected by different data plane functions;
information about a time in which data collection is allowed; and
information about a frequency at which data collection is allowed.

9. The method according to claim 2 or 7, wherein the configuration information of data storage comprises at least one of the following:
information about a data plane function that is allowed to perform data storage;
data information that can be stored by different data plane functions;
a time length of storage;
storage space information; and
security requirement information of data storage.

10. The method according to claim 2 or 7, wherein the configuration information of data access comprises at least one of the following:
a configuration of data information allowed to be accessed or obtained by each network function;
a data access configuration based on authorization and/or authentication;
whether time sequence data is provided;
whether real-time data is provided;
data security configuration information;
allowed data use;
information about a time in which data access is allowed;
information about a frequency at which data collection is allowed; and
a data access or service record configuration.

11. The method according to claim 3, wherein in a case that the authorization type of the data service is: querying the user whether the user-related data service is allowed when the user-related data service arrives, the method further comprises:
sending, by the first data plane function, request information to a terminal, wherein the request information is used to query the terminal whether the data service is allowed; and
receiving, by the first data plane function, request response information sent by the terminal, wherein the request response information comprises: the data service is allowed, or the data service is not allowed.

12. The method according to claim 11, wherein the request information comprises at least one of the following:
description information of the data service;
content comprising the requested data service;
use of the data service;
a validity period of the data service; and
a service quality requirement for the requested data service.

13. The method according to claim 6, wherein after the performing, by the first data plane function, authentication and/or security configuration for a user, the method further comprises:
in a case that verification on the authentication and/or the security configuration succeeds, sending a registration acceptance message of the user data service anchor to a terminal, and establishing the user-level data service anchor for the user.

14. The method according to claim 13, wherein the method further comprises:
in a case that the user-related data service request is received, and the data service request requires user data in which the user data service anchor has been established, querying, by the first data plane function, related information of the user data service anchor, to determine whether to receive the user-related data service request.

15. An apparatus for processing a user-related data service, wherein the apparatus is used in a first data plane function, and the apparatus comprises:
an obtaining module, configured to obtain user authorization information of the user-related data service; and
an execution module, configured to perform a first operation according to the user authorization information, wherein the first operation comprises at least one of the following:
determining whether to receive a user-related data service request;
performing authentication and/or security configuration for a user; and
establishing a user-level data service anchor for the user.

16. The apparatus according to claim 15, wherein the first data plane function comprises at least one of the following:
a first function of a core network data plane; and
a second function of a radio access network data plane.

17. The apparatus according to claim 15, wherein the user authorization information of the user-related data service comprises at least one of the following:
an authorization type of the data service;
authorization information of the data service;
effective duration of authorization of the data service;
user data hierarchical information;
a data range in which a network is allowed to perform the data service;
configuration information of data collection;
configuration information of data storage; and
configuration information of data access.

18. The apparatus according to claim 15, wherein the user-related data service comprises at least one of the following:
data collection comprising a user identifier;
data storage comprising the user identifier;
data access comprising the user identifier; and
a data request comprising the user identifier.

19. The apparatus according to claim 15, wherein the obtaining module comprises at least one of the following:
a first obtaining submodule, configured to obtain user-related data service subscription information, wherein the data service subscription information comprises the user authorization information;
a second obtaining submodule, configured to obtain the user authorization information that is of the user-related data service and that is sent by a terminal or an application function; and
a third obtaining submodule, configured to obtain the user authorization information that is of the user-related data service and that is stored by a radio access network storage function, wherein the user authorization information that is of the user-related data service and that is stored by the radio access network storage function is reported by the terminal or the application function.

20. The apparatus according to claim 15, wherein the apparatus further comprises:
a first receiving module, configured to receive a registration request message of the user data service anchor, wherein the registration request message comprises at least one of the following:
user-level anchor establishment request information; and
configuration information of the user-level anchor requesting to be registered.

21. The apparatus according to claim 20, wherein the configuration information of the user-level anchor requesting to be registered comprises at least one of the following:
user data hierarchical information;
a data range in which a network is allowed to perform the data service;
configuration information of data collection;
configuration information of data storage; and
configuration information of data access.

22. The apparatus according to claim 16 or 21, wherein the configuration information of data collection comprises at least one of the following:
information about a data plane function that is allowed to perform data collection;
data information that can be collected by different data plane functions;
information about a time in which data collection is allowed; and
information about a frequency at which data collection is allowed.

23. The apparatus according to claim 16 or 21, wherein the configuration information of data storage comprises at least one of the following:
information about a data plane function that is allowed to perform data storage;
data information that can be stored by different data plane functions;
a time length of storage;
storage space information; and
security requirement information of data storage.

24. The apparatus according to claim 16 or 21, wherein the configuration information of data access comprises at least one of the following:
a configuration of data information allowed to be accessed or obtained by each network function;
a data access configuration based on authorization and/or authentication;
whether time sequence data is provided;
whether real-time data is provided;
data security configuration information;
allowed data use;
information about a time in which data access is allowed;
information about a frequency at which data collection is allowed; and
a data access or service record configuration.

25. The apparatus according to claim 17, wherein in a case that the authorization type of the data service is: querying the user whether the user-related data service is allowed when the user-related data service arrives, the apparatus further comprises:
a first sending module, configured to send request information to a terminal, wherein the request information is used to query the terminal whether the data service is allowed; and
a second receiving module, configured to receive request response information sent by the terminal, wherein the request response information comprises: the data service is allowed, or the data service is not allowed.

26. The apparatus according to claim 25, wherein the request information comprises at least one of the following:
description information of the data service;
content comprising the requested data service;
use of the data service;
a validity period of the data service; and
a service quality requirement for the requested data service.

27. The apparatus according to claim 20, wherein the apparatus further comprises:
a second sending module, configured to: in a case that verification on the authentication and/or the security configuration succeeds, send a registration acceptance message of the user data service anchor to a terminal, and establish the user-level data service anchor for the user.

28. The apparatus according to claim 27, wherein the apparatus further comprises:
a determining module, configured to: in a case that the user-related data service request is received, and the data service request requires user data in which the user data service anchor has been established, query related information of the user data service anchor, to determine whether to receive the user-related data service request.

29. A network element having a first data plane function, comprising a processor, a memory, and a program or an instruction that is stored in the memory and that can be run on the processor, wherein when the program or the instruction is executed by the processor, the steps of the method for processing a user-related data service according to any one of claims 1 to 14 are implemented.

30. A network element having a first data plane function, comprising a processor and a communication interface, wherein the communication interface is used to obtain user authorization information of a user-related data service; and the processor is configured to perform a first operation according to the user authorization information, wherein the first operation comprises at least one of the following: determining whether to receive a user-related data service request; performing authentication and/or security configuration for a user; and establishing a user-level data service anchor for the user.

31. A readable storage medium, wherein the readable storage medium stores a program or an instruction, and when the program or the instruction is executed by a processor, the steps of the method for processing a user-related data service according to any one of claims 1 to 14 are implemented.

32. A chip, comprising a processor and a communication interface, wherein the communication interface is coupled to the processor, and the processor is configured to run a program or an instruction, to implement the method according to any one of claims 1 to 14.

33. A computer program product, wherein the computer program product is stored in a non-volatile storage medium, and the computer program product is executed by at least one processor to implement the method according to any one of claims 1 to 14.

34. A communication device, wherein the communication device is configured to implement the method according to any one of claims 1 to 14.
